# EUROPEAN PATENT APPLICATION

(11) **EP 0 606 838 A1**
(43) Date of publication of application: **20.07.1994**
(21) Application number: 94100053.1
(22) Date of filing: 04.01.1994
(51) Int. Cl.: G02C 5/00

(54) **Composite frame for eyeglasses, particularly for sunglasses and goggles**

(30) Priority: 13.01.1993 IT TO930013
(71) Applicant: NICO TRADING COMPANY s.r.l., I-10129 Turin (IT)
(72) Inventor: Vitaloni, Alberto, I-10145 Turin (IT)
(74) Representative: Robba, Eugenio

(57) **Abstract**

Composite frame for eyeglasses, composed of: a bar (1) to which the side arms (3) are hinged; a lens (7)-holding front (5); a junction member (9) between the bar (1) and the front (5). The bar (1) is provided with a longitudinal U-shaped groove (15), at the ends of which two hooking projections (17) are provided for the lens-holding front (5).

The front (5) is equipped, in the central section (21), with an horizontal slit (23), that on an upper side thereof generates a downward-arched member (25). The front (5) is suitable to be inserted into the U-shaped groove (15) of the bar (1) and to be secured in place due to two notches (27), that can be coupled with the bar projections (17), and to the insertion of the hooking member (9) between slit (23) and bridge (13).

## Description

The present invention refers to a composite frame for eyeglasses, particularly for sunglasses and goggles.

It is known how nowadays, especially in the field of sunglasses and/or goggles, the problem of changing a model is felt, both for frame and for lenses, not only for aesthetic reasons but also for practical ones, like lens curving, colour and so on.

So far this change has been substantially carried out by changing the eyeglasses, and replacing the undesired type with the type suitable for that particular moment.

Some attempts to realize eyeglasses with interchangeable members have been made, but they have been scarcely developed and these realizations have remained substantially limited and isolated.

Purpose of the present invention is solving these inconveniences by providing a type of eyeglasses with a composite, simple and practical frame, that can widely satisfy the above-said functional and aesthetic needs.

This frame is substantially composed of:
- a bar to which a right side arm and a left side arm are hinged;
- a lens-holding front;
- a junction member between said bar and said front; characterized in that
- said bar is composed of a single piece, with two thicker sections next to the eyes, mutually linked through a thinner, upward-arched section or bridge; said bar being provided with a longitudinal U-shaped groove, at the ends of which two hooking projections are provided for said lens-holding front;
- said lens-holding front is also composed of a single piece with two lens-holding sections mutually linked through a central section or nose, equipped with an horizontal slit, that on an upper side thereof generates a downward-arched member; said front being provided suitable to be inserted into said U-shaped groove of said bar and to be secured into said groove due to two notches, provided at the ends thereof, that can be coupled with said hooking projections provided in said bar;
- the junction member between bar and front being composed of a U-shaped member, horizontally placed and engaging with a wing said hooking slit of said front and with another wing over said bridge of said bar; the insertion of said member generating a resilient coupling between said bridge and said slit.

From what has been said above, the advantages of the inventive frame are apparent, since it consists of few members that, when combined, can give rise to various arrangements.

This characteristic of providing different arrangements is also an advantage for the single user that, though the basic members, like for example the bar, remain unchanged, can insert different types of lenses or lenses with different curving and so on.

Further characteristics and advantages will appear from the following detailed description, provided as a non limiting example, in which:

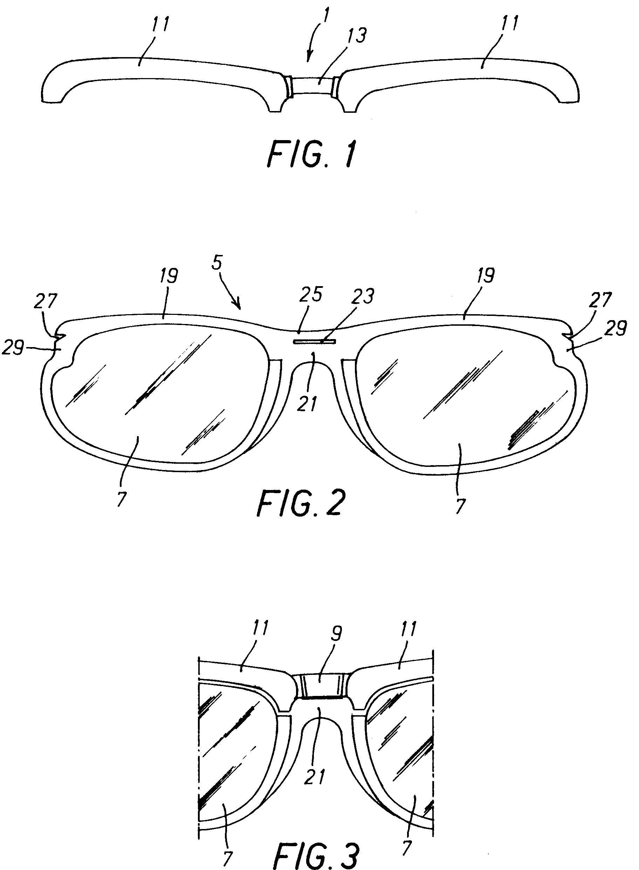

- Fig. 1 is a front view of the bar;
- Fig. 2 is a front view of the "front";

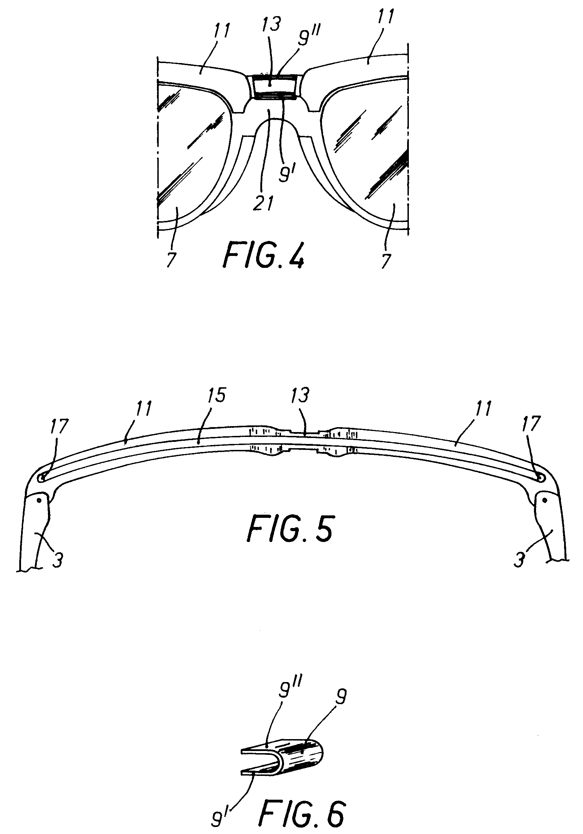

- Fig. 3 and 4 are partial front and rear views of the bridge-front junction area;
- Fig. 5 is a view of the bar from below;
- Fig. 6 is a perspective view of the central hooking U-shaped member.

As appears from the figures, the inventive frame is substantially composed of:
- a bar 1 to which a right side arm and a left side arm 3 are hinged;
- a lens 7-holding front 5;
- a junction member 9 between said bar 1 and said front 5.

The bar 1 is composed of a single piece, with two thicker sections 11 next to the eyes, mutually linked through a thinner, upward-arched section or bridge 13. Said bar 1 is provided with a longitudinal U-shaped groove 15, running for all the length of the bar 1, at the ends of which two hooking projections 17 are provided for the lens-holding front 5.

The lens-holding front 5 is also composed of a single piece with two lens-holding sections 19 mutually linked through a central section or nose 21, equipped with an horizontal slit 23, that on an upper side thereof generates a downward-arched member 25; said front 5 being provided suitable to be inserted into said U-shaped groove 15 of the bar 1 and to be secured into said seat due to two notches 27, provided at the ends 29 thereof, that can be coupled with the hooking projections 17 of the bar 1.

The junction member 9 between bar 1 and front 5 is composed of a U-shaped member, horizontally placed and engaging with a wing 9' the hooking slit 23 of the front 5 and with another wing 9" over the bridge 13 of the bar 1; the insertion of said member 9 generating a resilient coupling between said bridge 13 and said slit 23, and the following firm clamping of the frame.

## Claims

1. Composite frame for eyeglasses, particularly for sunglasses and goggles, substantially composed of:
- a bar (1) to which a right side arm and a left side arm (3) are hinged;
- a lens (7)-holding front (5);
- a junction member (9) between said bar (1) and said front (5); characterized in that
- said bar (1) is composed of a single piece, with two thicker sections (11) next to the eyes, mutually linked through a thinner, upward-arched section or bridge (13); said bar (1) being provided with a longitudinal U-shaped groove (15), at the ends of which two hooking projections (17) are provided for said lens-holding front (5);
- said lens (7)-holding front (5) is also composed of a single piece with two lens-holding sections (19) mutually linked through a central section or nose (21), equipped with an horizontal slit (23), that on an upper side thereof generates a downward-arched member (25); said front (5) being provided suitable to be inserted into said U-shaped groove (15) of said bar (1) and to be secured into said groove due to two notches (27), provided at the ends (29) thereof, that can be coupled with said hooking projections (17) provided in said bar (1);
- the junction member (9) between bar (1) and front (5) being composed of a U-shaped member, horizontally placed and engaging with a wing said hooking slit (23) of said front (5) and with another wing over said bridge (13) of said bar (1); the insertion of said member generating a resilient coupling between said bridge (13) and said slit (23) and the following firm clamping of said frame.
